(19) Europäisches Patentamt
European Patent Office
Office européen des brevets

(11) EP 0 582 188 B1

(12) EUROPÄISCHE PATENTSCHRIFT

(45) Veröffentlichungstag und Bekanntmachung des Hinweises auf die Patenterteilung:
**29.01.1997 Patentblatt 1997/05**

(51) Int Cl.[6]: **C09D 4/00**, C09D 4/06

(21) Anmeldenummer: **93112027.3**

(22) Anmeldetag: **28.07.1993**

# (54) Überzugsmittel und dessen Verwendung bei der Herstellung von Überzügen mit rasch bearbeitbarer Oberfläche

Coating and its use for the preparation of coatings with a rapidly processable surface

Revêtement et son utilisation pour la fabrication de revêtements ayant une surface rapidement traitable

(84) Benannte Vertragsstaaten:
**AT BE CH DE DK ES FR GB GR IT LI NL PT SE**

(30) Priorität: **30.07.1992 DE 4225104**

(43) Veröffentlichungstag der Anmeldung:
**09.02.1994 Patentblatt 1994/06**

(73) Patentinhaber: **Herberts Gesellschaft mit beschränkter Haftung**
**42285 Wuppertal (DE)**

(72) Erfinder:
- **Drüecke, Stefan, Dr.**
  **D-42281 Wuppertal (DE)**
- **Flosbach, Carmen, Dr.**
  **D-42115 Wuppertal (DE)**
- **Schubert, Walter, Dr.**
  **D-42349 Wuppertal (DE)**

(74) Vertreter: **Türk, Gille, Hrabal, Leifert**
**Brucknerstrasse 20**
**40593 Düsseldorf (DE)**

(56) Entgegenhaltungen:
**EP-A- 0 224 158**
**EP-A- 0 227 454**
**US-A- 2 759 913**

EP 0 582 188 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft Überzugsmittelzusammensetzungen, die zu Überzügen mit rasch bearbeitbarer Oberfläche führen. Sie sind insbesondere als Zusammensetzungen für Klarlacke und Decklacke geeignet.

Überzugsmittel auf der Basis CH-azider Verbindungen und olefinisch ungesättigter Verbindungen sind bekannt. Beispielsweise werden in der EP-A-0 224 158 Zweikomponenten-Lacke beschrieben, die derartige Komponenten enthalten. Diese Zweikomponenten-Lacke sind in der Wärme härtbar; die Härtungsreaktion wird durch Lewis- und/oder Brönstedt-Basen katalysiert. In der EP-A-0 227 454 werden Acetoacetatpolymere als Vernetzer für Acryloyl-ungesättigte Acrylate beschrieben. Derartige Systeme sind für die Herstellung von verschiedenen Überzügen geeignet.

Bei der Herstellung von Überzügen, insbesondere auf dem Kraftfahrzeugsektor in Mehrschichtaufbau, ist es sehr vorteilhaft, Schichten auszubilden, deren Oberfläche rasch härtbar ist, um eine möglichst geringe Verweilzeit der Karossen in der Lackierkabine zu erreichen.

Eine bekanntermaßen rasche Aushärtung erzielt man durch UV-Bestrahlung von Beschichtungszusammensetzungen, die ungesättigte Komponenten enthalten. Nachteilig dabei ist die unzureichende Vernetzung bei deckend pigmentierten Systemen in tieferen Schichten bzw. an verdeckten Stellen, die vom UV-Licht nicht errreicht werden. Diese Nachteile können durch Anwendung sogenannter Double-Cure-Systeme überwunden werden.

In der Literatur ist es bekannt, zur Herstellung solcher Schichten ein sogenanntes Double-Cure-System einzusetzen, das durch UV-Strahlung angehärtet und anschließend konventionell durch Erhitzen durchgehärtet werden kann. Ein solches System wird in der EP-A-0 247 563 beschrieben; es handelt sich dabei um ein Zweikomponenten-System aus einem strahlenhärtbaren Oligomer mit mindestens zwei (Meth)Acrylatgruppen, einem OH-funktionellen Polymer, einem Polyisocyanat, Lichtschutzmitteln und Photoinitiatoren. Polyisocyanate sind toxikologisch nicht unbedenklich. In der EP-A-0 245 639 wird die Herstellung von stabilen, kratzfesten und lösungsmittelbeständigen Beschichtungen beschrieben, die deckende Pigmente enthalten. Das System enthält neben einem ungesättigten Polyester Cellulosenitrat, Pigmente, Hydroperoxide, Sikkative und Photoinitiatoren; hier birgt der Umgang mit Peroxiden Risiken. Die Systeme sollen bis zu tieferen Schichten durch Strahlung härtbar sein.

Aufgabe der Erfindung ist die Bereitstellung von Überzugsmitteln, die zu Überzügen mit rasch bearbeitbarer Oberfläche führen, die frei von toxisch bedenklichen Polyisocyanaten formuliert werden können und keine Peroxide benötigen. Es sollen mechanisch und chemisch stabile Oberflächen erzielt werden.

Es hat sich gezeigt, daß diese Aufgabe gelöst werden kann durch ein Überzugsmittel, welches enthält:

A) 10 - 80 Gew.-% einer oder mehrerer Verbindungen mit im Mittel mindestens zwei CH-aciden Wasserstoffatomen, als Vernetzer,

B) 10 - 80 Gew.-% einer oder mehrerer α,β-ungesättigter Verbindungen mit mindestens zwei gleichen oder unterschiedlichen Gruppen der allgemeinen Formel

$$R_1R_2C{=}CR_3\text{-CO-}$$

die über den Rest eines zwei- oder mehrwertigen Alkohols, eines Di- oder Polyamins oder Aminoalkohols miteinander verbunden sind, worin $R_1$, $R_2$ und $R_3$ unabhängig voneinander ein Wasserstoffatom oder ein gerader oder verzweigter Alkylrest mit 1 bis 10 Kohlenstoffatomen, der eine oder mehrere olefinische Unsättigungen und/oder eine oder mehrere Hydroxylgruppen aufweisen kann, sind,

C) 0 - 50 Gew.-% einer oder mehrerer radikalisch oder ionisch polymerisierbarer Verbindungen,

D) 0,01 - 5 Gew.-%, bezogen auf die Summe der Gewichte der Komponenten A), B) und C), eines Katalysators in Form einer Lewis- oder Brönstedt-Base, wobei die konjugierten Säuren der letzteren einen pKA-Wert von mindestens 10 haben,

E) 0,1 - 10 Gew.-%, bezogen auf die Summe der Gewichte der Komponenten A), B) und C),; eines oder mehrerer Photoinitiatoren, sowie

gegebenenfalls Pigmente und/oder Füllstoffe, sowie gegebenenfalls lackübliche Hilfs- und Zusatzstoffe und gegebenenfalls ein oder mehrere organische Lösemittel und/oder Wasser.

Erfindungsgemäß handelt es sich bei den in den erfindungsgemäßen Überzugsmitteln als Komponente A) eingesetzten CH-aciden Vernetzern um solche, die mindestens zwei CH-acide Wasserstoffatome enthalten. Diese können beispielsweise aus einer oder mehreren der folgenden Gruppierungen stammen, die gleich oder verschieden sein

können:

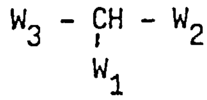

worin

$W_1$ = 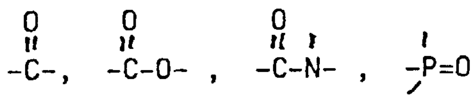 , -CN oder $-NO_2$;

$W_2$ = 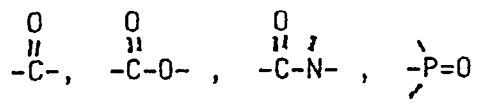 oder -CN;

$W_3$ = 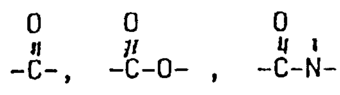 , H, Alkyl oder Alkylen;

wobei die vorstehend für die Reste $W_1$, $W_2$ und $W_3$ definierten Carboxyl- oder Carbonamid-Gruppen jeweils über das Kohlenstoffatom an die CH-Gruppe gebunden sind und die CH-Gruppe über mindestens einen der Reste $W_1$, $W_2$ und/oder $W_3$ an eine polymere oder oligomere Einheit gebunden ist. Die CH-azide Funktionalität der Komponente A) beträgt im Mittel $\geqq$ 2 pro Molekül. Wenn daher $W_3$ in der vorstehenden allgemeinen Formel die Bedeutung eines Wasserstoffatomes hat, so genügt eine derartige Gruppe, da diese zwei azide Wasserstoffatome aufweist.

Wie vorstehend erwähnt, beträgt die CH-acide Funktionalität der Komponente A) im Mittel $\geqq$ 2. Dies bedeutet, daß im Gemisch mit höherfunktionellen Molekülen auch monofunktionelle Moleküle verwendet werden können.

Bevorzugt sind die CH-aciden Vernetzerverbindungen im wesentlichen frei von primären, sekundären oder tertiären Aminogruppen, da diese die Lagerstabilität und die Lichtbeständigkeit negativ beeinflussen können.

Im Folgenden sind Beispiele für CH-acide Vernetzerkomponenten A aufgeführt, die unter die vorstehende allgemeine Formel fallen. Diese Beispiele werden im Folgenden in drei Gruppen A1, A2 und A3 unterteilt.

In der Gruppe A1 sind im Molekül im Mittel mindestens zwei Gruppen mit aktiven H-Atomen vom Typ

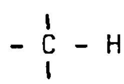

enthalten, die sich von Methantricarbonsäuremonoamideinheiten oder Acetessigsäureester-2-carbonsäureamiden ableiten.

Geeignete Verbindungen A1 sind beispielsweise Umsetzungsprodukte von Malonsäurediester wie Malonsäuredimethyl-, -diethyl-, -dibutyl-, -dipentylester oder Acetessigsäureester, wie Acetessigsäure-methyl-, -ethyl-, -butyl- oder -pentyl-ester, mit Polyisocyanaten.

Beispiele für hierfür einsetzbare Polyisocyanate sind aliphatische, cycloaliphatische oder aromatische Polyisocyanate mit mindestens zwei Isocyanatgruppen, wie Tetramethylendiisocyanat, Hexamethylendiisocyanat, 2,2,4-Trimethylhexamethylendiisocyanat, 1,12-Dodecandiisocyanat, Cyclohexan-1,3- und 1,4-diisocyanat, 1-Isocyanato-3,3,5-trimethyl-5-isocyanato-methylcyclohexan (=Isophorondiisocyanat, IPDI), Perhydro-2,4'-und/oder -4,4'-diphenylmethandiisocyanat, 1,3- und 1,4-Phenylendiisocyanat, 2,4- und 2,6-Toluylendiisocyanat, Diphenylmethan-2,4'- und/oder -4,4'-diisocyanat, 3,2'- und/oder 3,4-Diisocyanato-4-methyl-diphenylmethan, Naphthylen-1,5-diisocyanat, Triphenylmethan-4,4'-4"-triisocyanat, Tetramethylxylylen-diisocyanat oder Gemische dieser Verbindungen.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Urethangruppen, acylierte Harnstoffgruppen und Biuretgruppen aufweisende Polyisocyanate.

Besonders gut für die Umsetzung geeignet sind die bekannten Polyisocyanate, die hauptsächlich bei der Herstellung von Lacken eingesetzt werden, z.B. Biuret-, Isocyanurat- oder Urethangruppen aufweisende Modifizierungsprodukte der oben genannten einfachen Polyisocyanate, insbesondere Tris-(6-Isocyanatohexyl)-biuret oder niedermolekulare, Urethangruppen aufweisende Polyisocyanate, wie sie durch Umsetzung von im Überschuß eingesetzten IPDI mit einfachen mehrwertigen Alkoholen des Molekulargewichtsbereiches 62-300, insbesondere mit Trimethylolpropan erhalten werden können. Selbstverständlich können auch beliebige Gemische der genannten Polyisocyanate zur Herstellung der Vernetzerkomponente A1 eingesetzt werden.

Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind. Als solche kommen bevorzugt insgesamt mindestens zwei Aminogruppen und/oder Hydroxylgruppen aufweisende Verbindungen mit einem Zahlenmittel der Molmasse von 300 bis 10000, vorzugsweise 400 bis 6000, zur Anwendung. Bevorzugt werden die entsprechenden Polyhydroxylverbindungen, z.B. die in der Polyurethanchemie an sich bekannten Hydroxypolyester, Hydroxypolyether und/oder hydroxylgruppenhaltigen Acrylatharze verwendet.

In diesen bekannten Prepolymeren entspricht das Verhältnis von Isocyanatgruppen zu gegenüber NCO reaktiven Wasserstoffatomen 1,05 bis 10:1, vorzugsweise 1,1 bis 3:1, wobei die Wasserstoffatome vorzugsweise aus Hydroxylgruppen stammen.

Die Art und die Mengenverhältnisse der bei der Herstellung der NCO-Prepolymeren eingesetzten Ausgangsmaterialien werden im übrigen vorzugsweise so gewählt. daß die NCO-Prepolymeren a) eine mittlere NCO-Funktionalität von 2 bis 4, vorzugsweise von 2 bis 3 und b) ein Zahlenmittel der Molmasse von 500 - 10000, vorzugsweise von 800 - 4000 g/mol aufweisen.

Als Verbindung A1 eignen sich aber auch Umsetzungsprodukte von Estern und Teilestern mehrwertiger Alkohole der Malonsäure mit Monoisocyanaten. Mehrwertige Alkohole sind z.B. zwei- bis fünf-wertige Alkohole wie Ethandiol. die verschiedenen Propan-, Butan-, Pentan- und Hexandiole, Polyethylen- und Polypropylendiole, Glycerin, Trimethylolethan und - propan, Pentaerythrit, Hexantriol und Sorbit. Geeignete Monoisocyanate sind z.B. aliphatische Isocyanate wie n-Butylisocyanat, Octadecylisocyanat, cycloaliphatische Isocyanate wie Cyclohexylisocyanat, araliphatische Isocyanate wie Benzylisocyanat oder aromatische Isocyanate wie Phenylisocyanat.

Geeignet sind auch die entsprechenden Malonester und Acetessigsäureester von OH-Gruppen enthaltenden Acrylharzen, Polyestern, Polyurethanen, Polyethern, Polyesteramiden und -imiden und/oder Umsetzungsprodukte von Malonsäurehalbestern wie Malonsäuremonoethylester mit aliphatischen und aromatischen Epoxidharzen, z.B. epoxidgruppenhaltigen Acrylatharzen, Glycidylethern von Polyolen wie Hexandiol, Neopentylglykol, Diphenylolpropan und -methan und Glycidylgruppen enthaltenden Hydantoinen, ferner Gemische dieser Verbindungen.

Die Beispiele der folgenden Gruppe A2 zeigen eine geeignete Härtungskomponente mit aktiven CH-Gruppen. die mindestens zwei Gruppen der Formel (I)

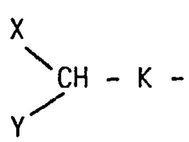

(I)

oder Struktureinheiten der Formel (I') oder (I")

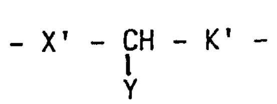 (I')    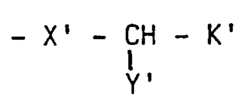 (I")

enthält, in der bedeuten:

K = 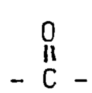 oder 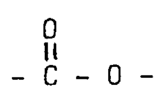

wobei letztere Gruppe über das C-Atom an die CH-Gruppe gebunden ist;

X und Y gleich oder verschieden sind und

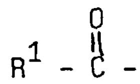

$-CO_2R^1$, -CN, $-NO_2$, $-CONH_2$, $-CONR^1H$ oder $-CONR^1R^1$ sind, wobei die Reste $R^1$ gleich oder verschieden sein können und für einen Kohlenwasserstoffrest, vorzugsweise einen Alkylrest mit 1 bis 12, vorzugsweise 1 bis 6 C-Atomen stehen, der auch durch Sauerstoff oder einen N-Alkylrest unterbrochen sein kann, mit der Maßgabe, daß nur einer der beiden Reste X, Y die $NO_2$-Gruppe darstellen kann;

K' = 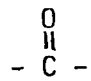 oder 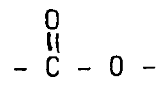

wobei letztere Gruppe über das C-Atom an die CH-Gruppe gebunden ist,

X' und Y' gleich oder verschieden sind und

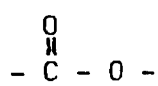 oder 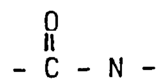

bedeuten,

mit der Maßgabe, daß wenn K' und X' gleichzeitig die Bedeutung von

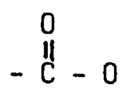

haben,

der Rest Y' vorzugsweise nicht die Bedeutung von

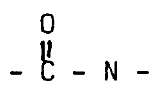

hat.

Die Zahl der Gruppen (I) in dem erfindungsgemäßen Härter beträgt vorzugsweise 2 bis 200 und insbesondere 2 bis 10, wobei sich die größeren Zahlenwerte auf oligomere oder polymere Produkte beziehen und in diesem Falle Mittelwerte darstellen, da Gemische vorliegen können.

Vorzugsweise besitzt die erfindungsgemäß verwendbare Härtungskomponente A2 die Formel (II)

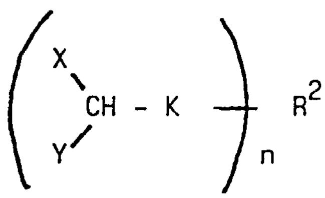

(II)

in der X, Y und K die obige Bedeutung haben, $R^2$ den Rest eines Polyols

$$R^2 (OH)_n$$

(wobei K =

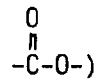

oder den Rest $R^2$ einer Polycarbonsäure

$$R^2 (COOH)_n$$

(wobei K =

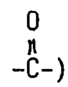

darstellt und n mindestens 2, vorzugsweise 2 bis 200, insbesondere 2 bis 10 bedeutet. Im Falle von oligomeren oder polymeren Härtungskomponenten handelt es sich bei diesen Zahlenangaben wiederum um Mittelwerte.

Weiterhin bevorzugt sind Härtungskomponenten, die unter die Gruppe A2 fallen, die man durch Umesterung von Verbindungen der Formel (III) oder der Formel (IV)

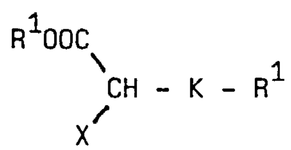 (III) 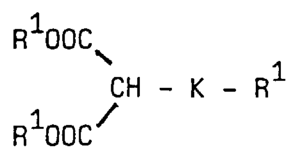 (IV)

mit Polyolen $R^2(OH)_n$ erhält, wobei X, K und $R^1$ die obige Bedeutung haben.

Bei den vorstehend genannten Polyolen $R^2(OH)_n$ kann es sich um einen mehrwertigen Alkohol handeln, der vorzugsweise 2 bis 12, insbesondere 2 bis 6 C-Atome enthält. Beispiele hierfür sind: Ethylenglykol, Propylenglykol-(1,2) und -(1,3), Butylenglykol-(1,4) und -(2,3), Di-β-hydroxyethylbutandiol, Hexandiol-(1,6), Octandiol-(1,8), Neopentylglykol, Cyclohexandiol-(1,6), 1,4-Bis-(hydroxymethyl)-cyclohexan, 2,2-Bis-(4-hydroxycyclohexyl)-propan, 2,2-Bis-(4-(β-hydroxyethoxy)phenyl)-propan, 2-Methyl-1,3,-propandiol, Glycerin, Trimethylolpropan, Hexantriol-(1,2,6)-Butantriol-(1,2,4), Tris(β-hydroxyethyl)-isocyanurat, Trimethylolethan, Pentaerythrit und deren Hydroxyalkylierungsprodukte, ferner Diethylenglykol, Triethylenglykol, Tetraethylenglykol, Polyethylenglykole, Dipropylenglykol, Tripropylenglykol, Polypropylenglykole, Dibutylenglykol, Polybutylenglykole und Xylylenglykol. Auch Polyester, die aus oder mit Lactonen, z.B. ε-Caprolacton oder Hydroxycarbonsäuren, wie z.B. Hydroxypivalinsäure, ω-Hydroxydecansäure, ω-Hydroxycapronsäure, Thioglykolsäure erhalten werden, können eingesetzt werden. Der Index n in obiger Formel (II) steht im Falle derartiger mehrwertiger Alkohole vorzugsweise für 2 bis 4.

Alternativ kann das Polyol eine oligomere oder polymere Polyolverbindung (Polyolharz) darstellen, deren zahlenmittleres Molekulargewicht Mn (bestimmt mittels Gelchromatographie; Polystyrolstandard), üblicherweise im Bereich von etwa 170 bis etwa 10000, vorzugsweise etwa 500 bis etwa 5000 liegt. In Sonderfällen kann das zahlenmittlere Molekulargewicht jedoch 10000 und mehr betragen. Als Oligomere/Polymere kommen dabei Polymerisate, Polykondensate oder Polyadditionsverbindungen in Betracht. Die Hydroxylzahl beträgt im allgemeinen 30 bis 250, vorzugsweise 45 bis 200 und insbesondere 50 bis 180 mg KOH/g. Diese OH-gruppenhaltigen Verbindungen können gegebenenfalls noch andere funktionelle Gruppen enthalten, wie Carboxylgruppen.

Beispiele für derartige Polyole sind Polyetherpolyole, Polyacetalpolyole, Polyesteramidpolyole, Polyamidpolyole, Epoxidharzpolyole oder deren Umsetzungsprodukte mit $CO_2$, Phenolharzpolyole, Polyharnstoffpolyole, Polyurethanpolyole, Celluloseester und -etherpolyole, teilweise verseifte Homo- und Copolymerisate von Vinylestern, teilweise

acetalisierte Polyvinylalkohole, Polycarbonatpolyole, Polyesterpolyole oder Acrylatharzpolyole. Bevorzugt sind Polyetherpolyole, Polyesterpolyole, Acrylatharze und Polyurethanpolyole. Derartige Polyole, die auch in Mischung eingesetzt werden können, sind beispielsweise in der DE-OS-31 24 784 beschrieben.

Beispiele für Polyurethanpolyole ergeben sich aus der Umsetzung von Di- und Polyisocyanaten mit einem Überschuß an Di- und/oder Polyolen. Geeignete Isocyanate sind z.B. Hexamethylendiisocyanat, Isophorondiisocyanat, Toluylendiisocyanat als auch Isocyanurate, gebildet aus drei Molen eines Diisocyanats wie Hexamethylendiisocyanat oder Isophorondiisocyanat, und Biurete, die aus der Reaktion von drei Molen eines Diisocyanates mit einem Mol Wasser hervorgehen. Geeignete Polyharnstoffpolyole können in ähnlicher Weise durch Umsetzung von Di- und Polyisocyanaten mit äquimolaren Mengen von Aminoalkoholen, z.B. Ethanolamin oder Diethanolamin, erhalten werden.

Beispiele für Polyesterpolyole sind die bekannten Polykondensate aus Di- oder Polycarbonsäuren oder deren Anhydriden, wie Phthalsäureanhydrid, Adipinsäure usw., und Polyolen wie Ethylenglykol, Trimethylolpropan, Glycerin usw.

Geeignete Polyamidpolyole können in ähnlicher Weise wie die Polyester erhalten werden, indem man die Polyole zumindest teilweise durch Polyamine, wie Isophorondiamin, Hexamethylendiamin, Diethylentriamin usw. ersetzt.

Beispiele für Polyacrylatpolyole oder OH-gruppenhaltige Polyvinylverbindungen sind die bekannten Copolymerisate aus hydroxylgruppenhaltigen (Meth)Acrylsäureestern oder Vinylalkohol und anderen Vinylverbindungen, wie z. B. Styrol oder (Meth)Acrylsäureestern.

Die obigen Polycarbonsäuren $R^2(CO_2H)_n$, wobei n hier bevorzugt 2 bis 4 ist, können aliphatischer, cycloaliphatischer, aromatischer und/oder heterocyclischer Natur sein und gegebenenfalls, z.B. durch Halogenatome, substituiert und/oder gesättigt sein. Als Beispiele für solche Carbonsäuren und deren Derivate seien genannt: Bernsteinsäure, Adipinsäure, Korksäure, Azelainsäure, Sebacinsäure, Phthalsäure, Terephthalsäure, Isophthalsäure, Trimellithsäure, Pyromellithsäure, Tetrahydrophthalsäure, Hexahydrophthalsäure, Di- und Tetrachlorphthalsäure, Endomethylentetrahydrophthalsäure und ihr Hexachlorderivat, 1.4- und 1.3-Cyclohexandicarbonsäure, Glutarsäure, Maleinsäure, Fumarsäure, dimere und trimere Fettsäuren, wie Ölsäure, gegebenenfalls in Mischung mit monomeren Fettsäuren oder cyclischen Monocarbonsäuren, wie Benzoesäure, p-tert-Butylbenzoesäure oder Hexahydrobenzoesäure. Weiterhin die Umsetzungsprodukte der oben genannten Polyole $R^2$ $(OH)_n$ mit cyclischen Carbonsäureanhydriden.

Bei der erfindungsgemäß verwendbaren Härtungskomponente A2 handelt es sich, je nach Art der Polyol- bzw. Polycarbonsäurekomponente, um mehr oder weniger viskose Flüssigkeiten oder um Feststoffe, die zumindest in den üblichen Lacklösemitteln weitgehend löslich sind und vorzugsweise weniger als 5 Gew.-%, insbesondere weniger als 1 Gew.-% an vernetzten Anteilen enthalten. Das CH-Äquivalentgewicht, das ein Maß für die Menge an Gruppen (I) bzw. Struktureinheiten (I')/(II") in (A2) ist, liegt im allgemeinen zwischen 100 und 5000, vorzugsweise 200 und 2000 und das Zahlenmittel des Molekulargewichts Mn in der Regel zwischen 200 und 10000, vorzugsweise zwischen 500 und 5000 (gelchromatographisch bestimmt; Polystyrolstandard). Verfahren zur Herstellung solcher Verbindungen sind in der EP-A-0 310 011 näher beschrieben.

Weitere Beispiele für die erfindungsgemäß verwendbare Härterkomponente sind solche vom Typ A3, bei dem sich die Gruppierung CH ableitet von einer Verbindung mit der Gruppierung $-CO-CHR^3-CO-$, $NC-CHR^3-CO-$, $NC-CH_2-CN$, $=PO-CHR^3-CO-$, $=PO-CHR^3-CN$, $=PO-CHR^3-PO=$, $-CO-CHR^3-NO_2$, worin $R^3$ $C_1$-$C_8$-Alkyl, H, vorzugsweise Wasserstoff ist. β-Dioxoverbindungen sind bevorzugt.

Die vorstehenden Gruppierungen von A3 können an mindestens eine mehrwertige monomere oder polymere Verbindung gebunden sein. Sie können beispielsweise an mindestens eine Verbindung der Gruppe ein- oder mehrwertige Alkohole, OH-Gruppen enthaltende Polymere, Polyamine und Polymercaptane gebunden sein. Sie sind, bezogen auf die CH-Funktion, mehrwertig. So können sie beispielsweise durch Veresterung eines Polyepoxids mit einer die Gruppierung bildenden -CH-Carbonsäure, z.B. Cyanessigsäure, hergestellt worden sein. Man erhält so eine Komponente A3 mit zwei aktiven H-Atomen je Epoxidgruppe. Hierbei lassen sich aromatische oder aliphatische Polyepoxide einsetzen.

Geeignete Beispiele für Verbindungen des Typs A3 sind Ketone, wie Acetylaceton, Benzoylaceton, Acetyldibenzoylmethan, ferner Ester der gegebenenfalls alkylsubstituierten Acetessigsäure wie α- und/oder γ-Methylacetessigsäure, oder der Acetondicarbonsäure, esterartig gebundene Malonsäureeinheiten der Malonsäure und deren Monoalkylderivate, geradkettig oder verzweigt, mit 1 bis 3 C-Atomen im Alkylrest, z.B. Methyl, Ethyl und n-Butyl oder auch Phenyl, oder der Cyanessigsäure mit ein- bis 6-wertigen Alkoholen mit 1 bis 10 C-Atomen. Die alkylsubstituierten Ester, z.B. α-Methyl- oder α,γ-Dimethylacetatessigester, haben nur ein aktives H-Atom und werden daher vorzugsweise in Form von Di- oder Polyestern mehrwertiger Alkohole eingesetzt, um eine genügende Anzahl reaktiver Gruppen zur Verfügung zu haben. Geeignete Alkohole für die Veresterung vorstehender Säuren sind z.B. Methanol, Ethanol, Butanol, Octanol und/oder, was bevorzugt ist, mehrwertige Alkohole bzw. Polyhydroxyverbindungen. Weitere Beispiele für A3 sind z.B. Acetessigester, Ethandiol-bisacetessigester, Glycerintris-malonsäureester., Trimethylolpropantris-acetessigester, Teilester dieser Säuren mit mehrwertigen Alkoholen, ebenfalls die entsprechenden Ester von OH-Gruppen enthaltenden Acrylharzen, Polyestern, Polyethern, Polyesteramiden und -imiden, Polyhydroxylaminen, ferner Nitrile dieser Säuren, sofern diese existieren, z.B. Malonsäuremono- oder -dinitril, Alkoxycarbonylmethanphosphonsäureester und die entsprechenden Bismethanphosphonsäureester. Die vorstehend genannten Säuren können auch in Form von Amiden an Amine, vorzugsweise Polyamine, gebunden sein, die auch Oligomere und/oder Polymere einschließlich Aminharze umfassen, wobei aliphatische Amine bevorzugt sind.

Wenn man von Polyaminen ausgeht, lassen sich Verbindungen A3 in Form von Amiden herstellen. So kann man z.B. von 1 Mol eines Alkylendiamins ausgehen, das mit 2 Mol Acetessigester umgesetzt wird unter Bildung einer Verbindung, die ebenfalls vier durch Amidgruppen aktivierte H-Atome aufweist.

Als Verbindungen für A3 eignen sich auch reaktive Nitroverbindungen, z.B. Nitroessigsäurederivate, wie Tris-(nitroessigsäure)-glycerinester oder Trimethylolpropan-nitroessigsäureester.

Unter Verbindungen für A3, die Gruppen des Typs -CH- bilden, sind z.B. Diketen sowie dessen Mono-α-Alkylsubstitutionsprodukte, ferner Tetrahydrodioxin zu nennen, die mit geeigneten Komponenten unter Bildung von Acetessigester- oder -amid-Gruppen reagieren können.

Die Härterkomponenten A können in üblichen Lösemitteln hergestellt werden. Es ist günstig, solche Lösemittel zu verwenden, die später bei der Herstellung des Überzugsmittels nicht stören. Es ist auch günstig, den Gehalt an organischen Lösemitteln möglichst gering zu halten. Wenn die Härterkomponente A polare Gruppen enthält, z.B. Amid- oder Urethan-Gruppierungen, so ist eine leichte Dispergierung in Wasser möglich. Dies kann gegebenenfalls auch dadurch unterstützt werden, daß die Vernetzerkomponenten neutralisierbare ionische Gruppen, z.B. Carboxylgruppen, im Oligomer- oder Polymergerüst enthalten. Solche Vernetzer mit ionischen Gruppen können gut in Wasser dispergiert werden. Dabei kann der Gehalt an organischen Lösemitteln auf niedrige Werte gesenkt werden, ohne die Viskosität der Vernetzerlösung wesentlich zu erhöhen.

Die erfindungsgemäßen Bindemittelzusammensetzungen können zur Viskositätseinstellung auch 2-Acetoacetoxy-ethylmethacrylat als Reaktivverdünner enthalten.

Als weitere Bindemittelkomponente B) wird in den erfindungsgemäßen Bindemittelzusammensetzungen eine Verbindung eingesetzt, die mindestens zwei ungesättigte funktionelle Gruppen der allgemeinen Formel (V) $R_1R_2C{=}CR_3$-CO- aufweist, worin $R_1$, $R_2$ und $R_3$ wie in den Ansprüchen definiert sind. Diese Gruppen können über kurz- oder langkettige Reste, Oligomere und/oder Polymere von zwei- oder mehrwertigen Alkoholen, Di- oder Polyaminen oder Aminoalkoholes miteinander verbunden sein, wobei diese Oligomere und Polymeren z.B. Zahlenmittel des Molekulargewichts Mn von 100 bis 10000 aufweisen können. Als Oligomere und Polymere kommen beispielsweise gesättigte und/oder ungesättigte zwei oder mehrere Hydroxylgruppen enthaltende Poylether, Polyester oder Polyurethane in Frage, z.B. solche auf der Basis von Maleinsäure, Phthalsäure und Diolen, Hydroxylgruppen enthaltenden Acrylharzen, aliphatischen oder vorzugsweise aromatischen, gegebenenfalls Hydroxylgruppen enthaltenden Epoxidharzen, z.B. solchen auf der Basis von Diphenylolpropan und/oder -methan, Hydantoin und/oder Aminharzen. Dabei kann der Rest der allgemeinen Formel (V) esterartig gebunden sein, z.B. durch Umsetzung von Glycidyl(meth)acrylat mit Carboxylgruppen von säurefunktionellen Polyethern, Polyestern, Polyurethanen oder Poly(meth)acrylaten oder durch Anlagerung von Acryl- oder Methacrylsäure oder deren Derivaten an Epoxygruppen von Epoxidharz oder durch Veresterung an Hydroxylgruppen von Polyolen. Geeignete mehrwertige Alkohole sind beispielsweise Alkandiole und Triole mit 2 bis 8 Kohlenstoffatomen, wie Ethandiol, die verschiedenen Propan-, Butan-, Hexan- und Octandiole, oder deren Homologe, die entsprechenden oligomeren Ether, ferner Glycerin, Trmethylolethan oder Trimethylolpropan, Hexantriol, Pentaerythrit, Dipentaerythrit, Sorbit, sowie Polyvinylalkohol, sowie ethoxylierte und propoxylierte Varianten.

Die Gruppen der allgemeinen Formel (V) können auch über NH-Gruppen und/oder OH-Gruppen an Polyamine mit mindestens zwei NH-Gruppen oder mindestens einer NH-Gruppe und mindestens einer OH-Gruppe gebunden sein. Als NH-Gruppen enthaltende Ausgangsverbindungen für derartige Verbindungen können beispielsweise Di- und Polyamine genannt werden, wie Alkylendiamine und deren Oligomere, wie Ethylendiamin, Propylendiamin, Diethylentriamin, Tetramine und höhere Homologe dieser Amine, sowie Aminoalkohole wie Diethanolamin oder dergleichen. Als Amine kommen z.B. auch Aminocarbonsäureester mehrwertiger Alkohole in Frage. Als Verbindung mit NH-Gruppen kommen z. B. in Frage Acryl- oder Methacrylsäurepolyamide, ferner Polyurethane, z.B. Polyisocyanate, die in Form von Polyurethangruppen verkappt sind, wie solche, die durch Umsetzung von Hydroxyethylacrylat mit Polyisocyanaten erhalten werden, Aminharze wie Methoxymelamine, vorzugsweise Hexamethylolmelamin, Harnstoffharze, wobei der Rest der allgemeinen Formel (V) mit der Gruppierung -CO- an die Amingruppen dieser Verbindungen als Amid gebunden ist. Falls diese Aminverbindungen über OH-Gruppen bzw. Hydroxyalkylgruppen verfügen, ist es auch möglich. daß der Rest der Formel (V) esterartig oder aber über eine Ethergruppe an diese Verbindungen gebunden ist. Für die Etherbildung des Restes der Formel (V) kann man von einem Hydroxyalkylester oder einem Hydroxyalkylamid einer ungesättigten Säure wie Acrylsäure ausgehen.

Der Rest der allgemeinen Formel (V) in der Komponente B) kann von einer ein- oder mehrfach ungesättigten Monocarbonsäure, z.B. mit 2 bis 10, vorzugsweise 3 bis 6 Kohlenstoffatomen, wie Zimtsäure, Crotonsäure, Citraconsäure, Mesaconsäure, Dihydrolävulinsäure, Sorbinsäure, vorzugsweise Acrylsäure und/oder Methacrylsäure abgeleitet sein.

Ebenfalls möglich ist die Verwendung von Addukten aus Copolymeren der Verbindung α-Dimethyl-m-isopropenylbenzylisocyanat (im weiteren Text stets m-TMI genannt) mit Hydroxy(meth)acrylmonomeren. Die Comonomeren,

die zur Copolymerisation mit m-TMI verwendet werden können, sind z.B. übliche Ester der (Meth)acrylsäure, wie sie vorstehend zur Erläuterung der Polyole bereits genannt wurden. Mögliche Hydroxy(meth)acrylmonomere zur Adduktbildung mit m-TMI-Copolymeren sind z.B. Hydroxyethyl(meth)acrylat, Hydroxypropyl(meth)acrylat oder Butandiolmonoacrylat. Ebenfalls möglich ist die Verwendung von Additionsprodukten von Hydroxyethylmethacrylat an Caprolacton.

Beispiele fpr die Komponente B) sind Hexandioldi(meth)acrylat und Dipropylenglykoldi(meth)acrylat und Beispiele für tri- und tetrafunktionelle Monomere sind Trimethylolpropantri(meth)acrylat und Pentaerythrittri- oder -tetraacrylat, sowie ethoxylierte und propoxylierte Varianten. Der hier verwendete Ausdruck (Meth) acrylat bedeutet Acrylate und/ oder Methacrylate. Beispiele für Oligomere oder Prepolymere sind (meth)acrylfunktionelle (Meth)acrylpolymere, Epoxidharz-(meth)acrylate, z. B. Umsetzungsprodukte aus 2 Mol (Meth)acrylsäure und handelsüblichen Epoxidharzen, wie z .B. Epicote® 828, Polyester(meth) acrylate, Amin (meth) acrylate, ungesättigte Polyester, ungesättigte Polyurethane, Silicon(meth)acrylate oder Komibinationen davon.

Die Komponente B) kann frei von Lösemitteln sein oder aber Restlösemittel von ihrer Herstellung enthalten, z.B. aliphatische und/oder aromatische Kohlenwasserstoffe. Der Festkörpergehalt kann auf gewünschte Werte eingestellt werden, z.B. durch Entfernen des Restlösemittels, beispielsweise durch Destillation oder durch Zusatz von Wasser oder Lösemitteln. die für die anschließende Bereitung von Überzugsmitteln benötigt werden und später beschrieben werden. Bevorzugt wird das gleiche Lösemittel wie für die Komponente A) verwendet.

Die erfindungsgemäßen Überzugsmittel können als Komponente C) in der Bindemittelkomponente auch zusätzliche durch energiereiche Strahlen härtbare Materialien enthalten, bei denen es sich um Monomere, Oligomere oder Polymere bzw. Copolymere handeln kann. Sie unterliegen keiner Einschränkung. Es kann sich sowohl um radikalisch als auch um ionisch polymerisierbare Verbindungen handeln. Bevorzugt sind radikalisch polymerisierbare Verbindungen, wobei diese auch günstig mit ionisch polymerisierbaren Verbindungen im Gemisch vorliegen können.

Beispiele für radikalisch polymerisierbare Verbindungen sind übliche strahlenhärtbare, insbesondere in UV-härtbaren Lacken verwendete Verbindungen auf der Basis von Monomeren, Oligomeren, Polymeren, Copolymeren oder Kombinationen davon, mit einer oder mehreren olefinischen Doppelbindungen, wie beispielsweise Acrylsäure- und Methacrylsäureester. Beispiele für monofunktionelle Monomere sind Butyl(meth)acrylat und Hydroxyethyl(meth)acrylat. Beispiele für difunktionelle Monomere sind Diacrylate, wie sie vorstehend als Beispiele für die Komponente B) aufgeführt wurden.

Als Monomere können aber auch Vinlyverbindungen vorliegen. Dabei kann es sich um mono- und/oder polyfunktionell Monomere handeln. Beispiele für monofunktionelle Monomere sind Hydroxybutylvinylether, Styrol, N-Vinylpyrrolidon. Beispiele für polyfunktionelle Monomere sind Butandioldivinylether, Cyclohexandivinylether.

Die Komponente D) besteht aus Katalysatoren in Form von Lewis-Basen oder Brönstedt-Basen, wobei die konjugierten Säuren der letzeren einen pKA-Wert von mindestens 10 haben. Die Komponente D) kann aus einem oder mehreren Katalysatoren bestehen. Als besonders geeignet erwiesen sich Lewis-Basen, wie z.B. solche der Gruppe von cycloaliphatischen Aminen, wie Diazabicyclooctan (DABCO), tert.-aliphatischen Aminen, wie Triethylamin, Tripropylamin, N-Methyldiethanolamin, N-Methyldiisopropylamin oder N-Butyldiethanolamin, sowie Amidinen wie Diazabicycloundecen (DBU), und Guanidinen, wie z .B. N,N,N',N'-Tetramethylguanidin. Weitere Beispiele sind alkyl- oder arylsubstituierte Phosphane, wie z.B. Tributylphosphan, Triphenylphosphan, Tris-p-tolylphosphan, Methyl-diphenylphosphan, sowie hydroxy- und aminfunktionalisierte Phosphane, wie z.B. Trishydroxymethylphosphan und Tris-dimethylaminoethylphosphan.

Beispiele für die einsetzbaren Brönstedt-Basen sind Alkoholate, wie Natrium- oder Kaliumethylat, quartäre Ammoniumverbindungen, wie Alkyl-, Aryl- oder Benzylammoniumhydroxide oder -halogenide, wie z.B. Tetraethyl- oder Tetrabutylammoniumhydroxid oder -fluorid, sowie Trialkyl- oder Triaryl-phosphoniumsalze oder -hydroxide.

Die Menge der Katalysatoren beträgt im allgemeinen 0,01 bis 5 Gew.-%, vorzugsweise 0,02 bis 2 Gew.-%, bezogen auf den Gesamtfeststoffgehalt der Komponenten A, B und C.

Die erfindungsgemäßen Beschichtungsmassen enthalten als Komponente E) Photoinitiatoren, wie sie für die radikalische und die ionische Polymerisation eingesetzt werden. Geeignet sind beispielsweise Initiatoren, die im Wellenlängenbereich von 190 bis 400 nm absorbieren.

Beispiele für verwendbare radikalische Initiatoren sind chlorhaltige Initiatoren, wie chlorhaltige aromatische Verbindungen, z.B. beschrieben in US-A-4,089,815; aromatische Ketone, wie in US-A-4,318,791 oder EP-A-0 003 002 und EP-A-0 161 163 beschrieben; Hydroxyalkylphenone, wie in US-A-4,347,111 beschrieben; wasserlösliche Initiatoren, beispielsweise auf der Basis von Hydroxyalkylphenonen, wie in US-A-4,602,097 beschrieben; ungesättigte Initiatoren wie OH-funktionelle aromatische Verbindungen, die beispielsweise mit Acrylsäure verestert wurden, wie in US-A-3,929,490,

EP-A-0 143 201 und EP-A-0 341 560 beschrieben; oder Kombinationen von derartigen Initiatoren, wie sie beispielsweise in US-A-4,017,652 beschrieben werden.

Spezielle Beispiele sind 2-Methyl-2-hydroxy-propiophenon, Benzophenon, Thioxanthonderivate, Acylphosphinoxide und Michlers Keton.

Besonders bevorzugte verwendbare radikalische Initiatoren sind Phosphinoxide und Kombinationen von Phosphinoxiden mit weiteren üblichen Initiatoren, wie vorstehend beschrieben.

Beispiele verwendbarer kationischer Initiatoren sind Triarylsulfoniumsalze der allgemeinen Formel

$$(Aryl)_3 S^+ X^-$$

worin Aryl einen Arylrest, wie den Phenylrest, darstellt und $X^-$ ein Anion ist, wie $SbF_6^-$, $PF_6^-$, $AsF_6^-$ und $BF_4^-$, wie in US-A-4,417,061, EP-A-0 327 194 und DE-A-2 904 626 beschrieben. weitere Beispiele für kationische Initiatoren sind Iodoniumsalze, Oxoniumsalze und Diazoniumsalze, wie sie beispielsweise in folgenden Literaturstellen beschrieben werden: EP-A-0 464 131, US-A-4,421,904, EP-A-0 145 633, EP-A-0 310 881, EP-A-0 310 882 (Iodoniumsalze); DE-A-3 808 590 und DE-A-3 808 591 (Diazoniumsalze).

Außer diesen Initiatoren können auch Metallocen-Komplexe eingesetzt werden, wie z.B. beschrieben in EP-A-0 094 915.

Bei den erfindungsgemäßen Bindemittelzusammensetzungen handelt es sich um sogenannte Zweikomponenten-Systeme.

Die Komponenten A, B, C und E werden gemeinsam als Bindemittelkomponente 1 und die Komponente D als Härterkomponente 2 gelagert.

Dies bedeutet, daß die Komponenten 1 und 2 getrennt gelagert und erst vor der Anwendung bzw. zur Anwendung beispielsweise zur Herstellung von Überzugsmitteln vermischt werden.

Die erfindungsgemäßen Überzugsmittelzusammensetzungen können Pigmente und/oder Füllstoffe bis zu 80 Gew.-%, bezogen auf Gesamtfeststoff, inklusive Harz und Härter, enthalten.

Als Füllstoffe können z.B. Sulfate wie Bariumsulfat, Kieselsäuren, wie pyrogene Kieselsäuren (Aerosile) und Silikate, wie Talkum eingesetzt werden.

Als Pigmente können lacklübliche Pigmente eingesetzt werden. Es handelt sich um übliche deckende anorganische oder organische Pigmente, wie Titandioxid, Ultramarinblau, Eisenoxide und Phthalocyaninblau, weiterhin Effektpigmente wie z.B. Metallschuppenpigmente oder Perlglanzpigmente.

Gegebenenfalls weitere verwendbare Hilfs- und Zusatzstoffe sind Thixotropier-, Glätt-, Mattierungs- und Verlaufmittel.

Die erfindungsgemäßen Überzugsmittelzusammensetzungen können organische Lösungsmittel und/oder Wasser enthalten.

Geeignete organische Lösemittel für die Herstellung von Überzugsmitteln, beispielsweise Lacken, sind solche, wie sie auch bei der Herstellung der Einzelkomponenten A und B verwendet werden können. Beispiele für derartige Lösemittel sind organische Lösemittel, wie aliphatische und aromatische Kohlenwasserstoffe, beispielsweise Toluol, Xylol, Gemische aliphatischer und/oder aromatischer Kohlenwasserstoffe, Ester, Ether und Alkohole. Es sind dies lacküblichе Lösemittel. Zur Herstellung der Überzugsmittel aus den erfindungsgemäßen Bindemitteln können auch wäßrige Lösungen bereitet. werden. Hierzu können gegebenenfalls geeignete Emulgatoren verwendet werden, wie sie auf dem Lacksektor üblich sind.

Die aus den erfindungsgemäßen Bindemitteln hergestellten Überzugsmittel können auf die gewünschte Applikationsviskosität durch entsprechende Regelung des Zusatzes von Lösemitteln und/oder Additiven eingestellt werden.

Als weitere Hilfs- und Zusatzstoffe können den Überzugsmitteln Sensibilisatoren zugefügt werden. Dabei handelt es sich bevorzugt um organische aromatische Verbindungen mit/ohne Heteroatome. Beispiele für aromatische Sensibilisatoren ohne Heteroatomen sind Anthracen und Perylen. Beispiele für aromatische Sensibilisatoren mit Heteroatomen sind Thioxanthenderivate, Xanthonderivate und Sulfonium-Komplexsalze.

Die Überzugsmittel können je nach Mengenverhältnis der Komponenten 1 zur Komponente 2, Äquivalentgewicht und Katalysatormenge beispielsweise auf Topfzeiten zwischen wenigen Minuten und 24 Stunden eingestellt werden.

Die Applikation der so hergestellten Überzugsmittel kann in üblicher Weise erfolgen, beispielsweise durch Tauchen, Spritzen, Streichen oder auf elektrostatischem Wege. Anschließend werden gegebenenfalls vorhandene Lösemittel oder Wasser durch Wärmebehandlung (beispielsweise Infrarot-Strahlung oder Heißluft) verdampft.

Die erfindungsgemäßen Überzugsmittel/Zweikomponenten-Systeme sind nach Applikation und gegebenenfalls Abdampfen von Lösemitteln durch Strahlung härtbar. Insbesondere sind sie zur Härtung durch UV-Strahlung oder durch Elektronenstrahlung geeignet. Es sind auch Kombinationen von IR/UV-Strahlung oder IR/Elektronenstrahlung geeignet. Als Strahlungsquellen können übliche für die UV- bzw. Elektronenstrahlung geeignete Quellen eingesetzt werden, wie Quecksilber-Hochdruckstrahler und Quecksilber-Mitteldruckstrahler. In tieferen Schichten findet anschließend z.B. innerhalb einiger Stunden, eine Durchhärtung aufgrund Michael-Addition statt.

Wie erwähnt, werden die erfindungsgemäßen Überzugsmittel nach Auftrag auf ein zu beschichtendes Substrat an der Oberfläche rasch durch Strahlung gehärtet. Beispielsweise ist eine Härtung der Oberflächenschicht bis zu 2 mm Tiefe innerhalb von 10 min möglich. Hierdurch ergibt sich die Möglichkeit einer sofortigen Bearbeitung der Oberfläche, beispielsweise durch Schleifen.

Die erfindungsgemäßen Überzugsmittel weisen den Vorteil auf, daß sie frei von Lösemitteln oder nur mit geringen Lösemittelmengen formuliert werden können. Die erfindungsgemäßen Überzugsmittel lassen sich zudem so formulieren, daß sie frei von toxischen Bestandteilen, wie beispielsweise von Styrol sind.

Selbstverständlich besteht die Möglichkeit, die erfindungsgemäßen Überzugsmittel unter Verzicht auf Komponente D einkomponentig zu formulieren und dem Strahlenhärtungsschritt eine thermische Nachbehandlung bei erhöhten Temperaturen von z. B. 100 - 150°C nachzuschalten.

Ein besonders bevorzugtes Anwendungsgebiet für die erfindungsgemäßen Bindemittel stellt die Bereitstellung von Überzugsmitteln für Lackierungen auf dem Gebiet des Kraftfahrzeugsektors dar. Durch die günstigen Härtungsbedingungen der aus den erfindungsgemäßen Bindemitteln hergestellten Überzugsmittel sind diese besonders auch für Kraftfahrzeug-Reparaturlackierungen geeignet.

Die folgenden Beispiele dienen zur Erläuterung der Erfindung. Alle Teile (T) und Prozentangaben (%) beziehen sich auf das Gewicht.

Herstellungsbeispiel 1

Herstellung eines acetessigesterfunktionalisierten Polyesters (Komponente A)

1a) Herstellung des Polyesters

In einem 2-Liter-Dreihalskolben, der mit Rührer, Abscheider, Thermometer und Rückflußkühler versehen ist, werden 336,7 T Trimethylolpropan, 366,9 T Adipinsäure und 297 T Hexandiol mit 5 T unterphosphoriger Säure versetzt. Das Gemisch wird von 180°C in der Schmelze langsam weiter auf 230°C erhitzt, wobei das Wasser abgeschieden wird. Die Reaktion wird fortgesetzt, bis eine Säurezahl von 20 mg KOH/g erreicht ist. Anschließend wird unter Wasserstrahlvakuum bis zu einer Säurezahl < 1,5 mg KOH/g kondensiert. Der resultierende Polyester hat dann eine OH-Zahl von 466 mg KOH/g und eine Viskosität von 3200 mPas.

1b) Herstellung eines acetessigesterfunktionalisierten Polyesters auf der Basis des Polyesters, hergestellt unter 1a.

In einem 4-Liter-Dreihalskolben, der mit Rührer, Tropftrichter, Abscheider und Rückflußkühler versehen ist, werden 1000 T des unter 1a) hergestellten Polyesters vorgelegt. Zu diesem Harz werden 850 T Acetessigester und 1,5 T 98%ige Ameisensäure gegeben und auf 130°C erhitzt, wobei Ethanol abgeschieden wird. Das Harz wird weiter auf 165°C erhitzt, bis insgesamt 400 T Destillat abgeschieden sind. Im Anschluß daran werden im Vakuum alle flüchtigen Bestandteile abgezogen. Das erhaltene 98,1%ige Harz hat dann eine Viskosität von 3100 mPas und eine Farbzahl von 65 Hazen.

1c) Herstellung von Trimethylol-propantriacetoacetat

In einem 4-Liter-Dreihalskolben, der mit Rührer, Rückflußkühler, Thermometer und Tropftrichter versehen ist, werden 670 T Trimethylolpropan und 1950 T Acetessigsäureethylester vorgelegt. Das Gemisch wird unter Rühren erhitzt, bis Ethanol abspaltet. Nach 4 Stunden sind 488 g Destillat entstanden; die Temperatur liegt bei 175°C. Es wird Vakuum angelegt und weiter abdestilliert bis insgesamt 806 g Destillat erhalten werden. Die entstandene acetessigesterfunktionelle Komponente 1c hat dann einen theoretischen Festkörper von 96,5 %, eine Viskosität von 172 mPas und eine Säurezahl von 131,6 mg KOH/g Festharz.

Beispiel 2

Gepfropftes Polyesterharz 2b: (Komponente B)

2a) Ungesättigtes Polyesterharz

In ein mit Rührer, Thermometer und Destillationskolonne mit aufgesetztem Wasserabscheider versehenes Reaktionsgefäß werden 140,0 T Trimethylolpropan, 435,0 T Neopentylglykol, 370,0 T Hexandiol-1,6 sowie 409,0 T Tetrahydrophthalsäureanhydrid, 294,0 T Maleinsäureanhydrid, 352,0 T Phthalsäureanhydrid und 0,8 T Hydrochinon eingewogen. Nach Zugabe von 160 T Xylol wird unter Stickstoffatmosphäre aufgeheizt. Bei einer Maximaltemperatur von 195°C wird solange Wasser ausgekreist, bis die Säurezahl weniger als 30 mg KOH/g Festharz beträgt. Dann wird abgekühlt und die Destillationskolonne durch eine Destillationsbrücke ersetzt. Unter Vakuum wird das zugesetzte Xylol bei 120°C abdestilliert. Endwerte: FK (1h/150°C): 99,3 %, SZ: 29,9 mg KOH/g Festharz, Viskosität: hochviskos, Farbzahl (Gardner): 2-3

2b) Pfropfung von 1a) mit Glycidylmethacrylat

In einem Reaktionsgefäß mit Rührer, Thermometer und Rückflußkühler werden 2000.0 T Polyesterharz 2a) mit 126,6 T Glycidylmethacrylat und 4,2 T Triphenylphosphin versetzt und unter Stickstoffatmosphäre auf 120°C erhitzt. Die Reaktion wird solange bei 120°C weitergeführt, bis eine Säurezahl von unter 5 mg KOH/g Festharz erreicht ist. Anschließend wird mit 533 T Pentaerythrittriacrylat verdünnt. Endwerte: FK (1h/150°C): 98,7 %, ca.

80%ig in Pentaerythrittriacrylat, SZ: 3,5 mg KOH/g Festharz.

Gepfropftes Polyesterharz 2d:

2c) Ungesättigtes Polyesterharz
378,0 T Trimethylolpropan, 1760,5 T Neopentylglykol, 330,0 T Hexandiol-1,6, 1104,5 T Tetrahydrophthalsäureanhydrid, 1424,0 T Maleinsäureanhydrid, 2,0 T Hydrochinon und 400 T Xylol werden analog 1a) bis zum Erreichen einer Säurezahl von unter 30 mg KOH/g Festharz kondensiert.
2d) Pfropfung mit Glycidylmethacrylat
Das unter 2c) hergestellte Polyesterharz wird direkt mit 291,0 T Glycidylmethacrylat und 9,0 T Triphenylphosphin versetzt. Die Temperatur wird solange bei 120°C gehalten, bis eine Säurezahl von unter 5 mg KOH/g Festharz erreicht ist.

3) Klarlack:

| | |
|---|---|
| Polyester von Beispiel 1b) | 29,0 |
| Polyester von Beispiel 2d) | 16,0 |
| Photoinitiator: 2-Hydroxy-2-methyl-1-phenyl-propan-1-on | 5,0 |
| Pentaerythrit-tri-acrylat | 21,0 |
| handelsübliches Poylesteracrylat (Komponente B) | 28,0 |
| Diazabicycloundecen | 1,0 |
| | 100,0 |

4) Klarlack:

| | |
|---|---|
| Polyester von Beispiel 1c) | 40,0 |
| Polyester von Beispiel 2b) | 22,0 |
| Photoinitiator: 2-Hydroxy-2-methyl-1-phenyl-propan-1-on | 7,0 |
| Pentaerythrit-tri-acrylat | 30,0 |
| Diazabicycloundecen | 1,0 |
| | 100,0 |

5) Decklack:

| | |
|---|---|
| Polyester von Beispiel 1c) | 23,0 |
| Polyester von Beispiel 2b) | 19,0 |
| Photoinitiator: 1-Hydroxy-cyclohexyl-phenylketon | 3,0 |
| pyrogenes Siliciumdioxid | 0,3 |
| Titandioxid | 23,0 |
| handelsübliches Poylesteracrylat (Komponente B) | 22,0 |
| Pentaerythrit-tri-acrylat | 8,0 |
| Diazabicycloundecen | 1,7 |
| | 100,0 |

6) Spachtel:

| | |
|---|---|
| Polyester von Beispiel 1b) | 16,5 |
| Photoinitiator: 1-Hydroxy-cyclohexyl-phenylketon | 3,0 |
| Dipropylenglykoldiacrylat | 17,0 |
| pyrogenes Siliciumdioxid | 0,5 |

(fortgesetzt)

| | |
|---|---|
| Talkum | 40,1 |
| Füllstoff (Blancfix F) | 10,0 |
| Titandioxid | 2,0 |
| Pentaerythrit-tri-acrylat | 9,0 |
| Diazabicycloundecen | 1,9 |
| | 100,0 |

Die Klarlacke bzw. Decklacke aus den Beispielen 3, 4 und 5 wurden mit einer Rakel in einer Naßfilmschichtdicke von ca. 50 µm aufgetragen und durch 10 minütiges Bestrahlen mit einer Hönle-Handlampe, Typ 250 (Abstand 20 cm), gehärtet. Die Filme besitzen eine hohe Härte, guten Glanz und gute Benzinbeständigkeit und sind nach Bestrahlung klebfrei.

Mit der in Beispiel 6 beschriebenen Formulierung wurde mit einem Spachtel eine 1 cm tiefe (≈ 1,5 $cm^3$) Aushöhlung ausgefüllt. Durch 10 minütiges Bestrahlen mit einer Hönle-Handlampe, Typ 250 (Abstand 20 cm), wurde die Oberfläche (≈ 2mm) gehärtet und ist dann bearbeitbar. Über Nacht härtet dann die gesamte Formulierung durch.

## Patentansprüche

**1.** Überzugsmittel, enthaltend

A) 10 - 80 Gew.-% einer oder mehrerer Verbindungen mit im Mittel mindestens zwei CH-aciden Wasserstoffatomen, als Vernetzer,

B) 10 - 80 Gew.-% einer oder mehrerer α,β-ungesättigter Verbindungen mit mindestens zwei gleichen oder unterschiedlichen Gruppen der allgemeinen Formel

$$R_1R_2C=CR_3\text{-}CO\text{-}$$

die über den Rest eines zwei- oder mehrwertigen Alkohols, eines Di- oder Polyamins oder Aminoalkohols miteinander verbunden sind, worin $R_1$, $R_2$ und $R_3$ unabhängig voneinander ein Wasserstoffatom oder ein gerader oder verzweigter Alkylrest mit 1 bis 10 Kohlenstoffatomen, der eine oder mehrere olefinische Unsättigungen und/oder eine oder mehrere Hydroxylgruppen aufweisen kann, sind,

C) 0 - 50 Gew.-% einer oder mehrerer radikalisch oder ionisch polymerisierbaren Verbindungen,

D) 0,01 - 5 Gew.-%, bezogen auf die Summe der Gewichte der Komponenten A), B) und C), eines Katalysators in Form einer oder mehrerer Lewis-oder Brönstedt-Basen, wobei die konjugierten Säuren der letzteren einen pKA-Wert von mindestens 10 haben,

E) 0,1 - 10 Gew.-%, bezogen auf die Summe der Gewichte der Komponenten A), B) und C), eines oder mehrerer Photoinitiatoren, sowie

gegebenenfalls Pigmente und/oder Füllstoffe, sowie gegebenenfalls lackübliche Hilfs- und Zusatzstoffe und gegebenenfalls ein oder mehrere organische Lösemittel und/oder Wasser.

**2.** Überzugsmittel nach Anspruch 1, enthaltend eine Vernetzerkomponente A) mit im Mittel mindestens zwei CH-aciden Wasserstoffatomen, die aus einer oder mehreren der folgenden Gruppierungen stammen, die gleich oder verschieden sein können:

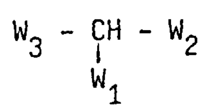

worin

$W_1$ = 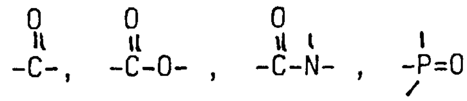 , -CN oder $-NO_2$;

$W_2$ = 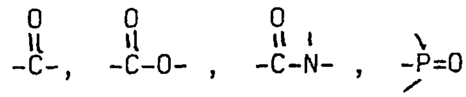 oder -CN;

$W_3$ = 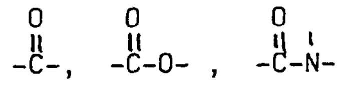 , H, Alkyl oder Alkylen;

wobei die Reste

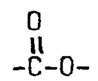 und 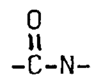

jeweils über das Kohlenstoffatom an die CH-Gruppe gebunden sind und die CH-Gruppe über mindestens einen der Reste $W_1$, $W_2$ und/oder $W_3$ an eine polymere oder oligomere Einheit gebunden ist.

3. Überzugsmittel nach Anspruch 1 oder 2, dadurch gekennzeichnet, daß es in lösemittelfreier Form vorliegt.

4. Überzugsmittel nach Anspruch 1 oder 2, dadurch gekennzeichnet, daß es in lösemittelhaltiger Form vorliegt.

5. Überzugsmittel nach Anspruch 1 oder 2, dadurch gekennzeichnet, daß es in Form einer wäßrigen Lösung vorliegt.

6. Überzugsmittel nach einem der Ansprüche 1 bis 5, dadurch gekennzeichnet, daß es einen oder mehrere Sensibilisatoren enthält.

7. Überzugsmittel nach einem der Ansprüche 1 bis 6 in Form eines von Pigmenten freien Klarlackes oder eines Pigmente enthaltenden Decklackes.

8. Verfahren zur Herstellung eines Überzugs, dadurch gekennzeichnet, daß man auf ein zu beschichtendes Substrat ein Überzugsmittel nach einem der Ansprüche 1 bis 7 aufbringt, die Oberfläche des erhaltenen Films durch energiereiche Strahlung, insbesondere UV-Strahlung härtet und die tieferen Schichten anschließend bei Raumtemperatur oder durch Erwärmen durchhärten läßt.

9. Verwendung der Überzugsmittel nach einem der Ansprüche 1 bis 7 zur Herstellung von Überzügen mit rasch aushärtender Oberfläche.

10. Verwendung der Überzugsmittel nach einem der Ansprüche 1 bis 7 als Klarlack oder Decklack oder Füller.

11. Verwendung der Überzugsmittelzusammensetzung nach einem der Ansprüche 1 bis 7 zur Herstellung von Klarlack- bzw. Decklackschichten bei Mehrschichtlackierungen, insbesondere bei der Lackierung von Kraftfahrzeugen oder Kraftfahrtzeugteilen.

## Claims

1. A coating medium, containing

A) 10 - 80 % by weight of one or more compounds containing on average at least two acidic CH hydrogen atoms, as crosslinking agents,

B) 10 - 80 % by weight of one or more α,β-unsaturated compounds containing at least two identical or different groups of general formula

$$R_1R_2C=R_3\text{-CO-}$$

which are bonded to each other via the radical of a mono- or polyhydric alcohol, of a di- or polyamine or of an amino alcohol, wherein $R_1$, $R_2$ and $R_3$, independently of each other, are a hydrogen atom or a straight or branched alkyl radical containing 1 to 10 carbon atoms, which may comprise one or more olefinically unsaturated positions and/or one or more hydroxyl groups,

C) 0 - 50 % by weight of one or more compounds polymerisable by a radical or ionic mechanism,

D) 0.01 - 5 % by weight, with respect to the sum of the weights of components A), B) and C), of a catalyst in the form of one or more Lewis or Brönsted bases, wherein the conjugate acids of the latter have a pKa of at least 10,

E) 0.1 - 10 % by weight, with respect to the sum of the weights of components A), B) and C), of one or more photoinitiators, and optionally pigments and/or extenders, and optionally customary lacquer auxiliary materials and additives, and optionally one or more organic solvents and/or water.

**2.** A coating medium according to claim 1, containing a crosslinking component A) containing on average at least two acidic CH hydrogen atoms which originate from one or more of the following groupings, which may be the same or different:

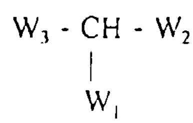

wherein

$W_1$ = 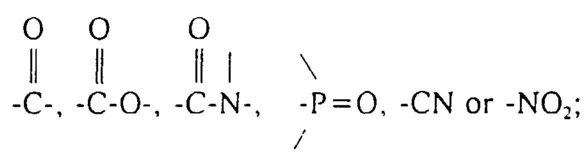

$W_2$ = 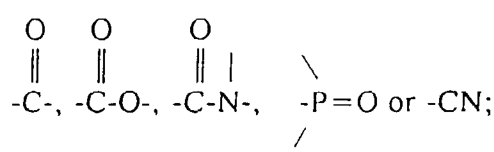

$W_3$ = 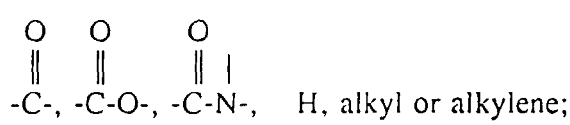

wherein the

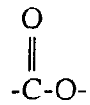 and 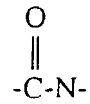

radicals are each bonded to the CH group via the carbon atom and the CH group is bonded to a polymeric or oligomeric unit via at least one of the $W_1$, $W_2$ and/or $W_3$ radicals.

**3.** A coating medium according to claim 1 or 2, characterised in that it exists in solvent-free form.

**4.** A coating medium according to claim 1 or 2, characterised in that it exists in solvent-containing form.

**5.** A coating medium according to claim 1 or 2, characterised in that it exists in the form of an aqueous solution.

**6.** A coating medium according to any one of claims 1 to 5, characterised in that it contains one or more sensitisers.

**7.** A coating medium according to any one of claims 1 to 6 in the form of a clear lacquer free from pigments or a covering lacquer containing pigments.

**8.** A method of producing a coating, characterised in that a coating medium according to any one of claims 1 to 7 is applied to a substrate to be coated, the surface of the film obtained is hardened by high-energy radiation, particularly by UV radiation, and the lower layers are subsequently hardened throughout at room temperature or by heating.

**9.** The use of the coating media according to any one of claims 1 to 7 for producing coatings having a rapidly hardening surface.

**10.** The use of the coating media according to any one of claims 1 to 7 as a clear lacquer or covering lacquer or primer-surfacer.

**11.** The use of the coating medium composition according to any one of claims 1 to 7 for producing clear lacquer or covering lacquer layers in multi-layer coatings, particularly in the coating of motor vehicles or motor vehicle parts.

## Revendications

**1.** Produit de revêtement, contenant

A) de 10 à 80 % en poids d'un ou plusieurs composés ayant en moyenne deux atomes d'hydrogène CH-acides, servant d'agents de réticulation,
B) de 10 à 80 % en poids d'un ou plusieurs composés $\alpha,\beta$-insaturés, comportant au moins deux groupes identiques ou différents de formule générale :

$$R_1R_2C{=}CR_3\text{-CO-}$$

qui sont reliés l'un à l'autre par l'intermédiaire d'un résidu d'un dialcool ou d'un polyalcool, d'une di- ou d'une polyamine, ou d'un amino-alcool, où $R_1$, $R_2$ et $R_3$, indépendamment les uns des autres, sont des atomes d'hydrogène ou des radicaux alkyle à chaîne droite ou ramifiée ayant de 1 à 10 atomes de carbone, qui peuvent comporter une ou plusieurs insaturations oléfiniques et/ou un ou plusieurs groupes hydroxyle,

C) de 0 à 50 % en poids d'un ou plusieurs composés polymérisable par polymérisation radicalaire ou ionique,
D) de 0, 01 à 5 % en poids, par rapport à la somme des poids des constituants A), B) et C), d'un catalyseur sous forme d'une base de Lewis ou de Brönstedt, où les acides conjugués de ces derniers ont un $pK_A$ d'au moins 10,
E) de 0,1 à 10 % en poids, par rapport à la somme des poids des constituants A), B) et C), d'un ou plusieurs photoamorceurs,

et éventuellement aussi des pigments et/ou des charges, et éventuellement aussi des additifs et adjuvants usuels dans la technique des peintures, et éventuellement un ou plusieurs solvants organiques et/ou de l'eau.

**2.** Produit de revêtement selon la revendication 1, contenant un constituant de réticulation A), avec en moyenne au moins deux atomes d'hydrogène CH-acides, qui dérivent de l'un ou plusieurs des groupements suivants, qui peuvent être identiques ou différents :

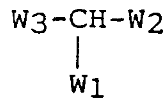

où

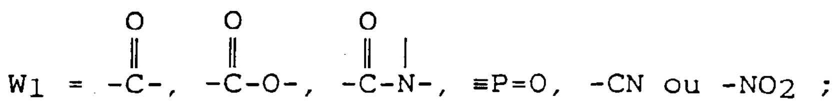

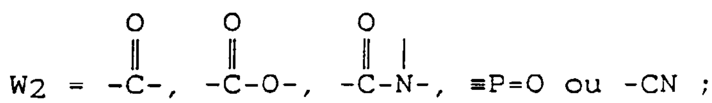

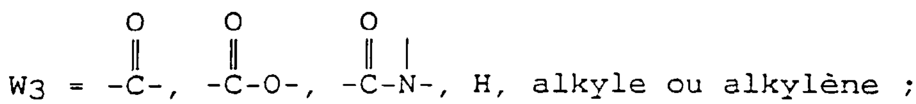

où les radicaux

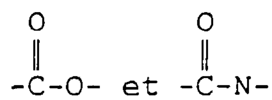

sont chacun liés au groupe CH par l'intermédiaire de l'atome de carbone, et le groupe CH est, par au moins l'un des radicaux $W_1$, $W_2$ et/ou $W_3$, lié à un motif polymère ou oligomère.

**3.** Produit de revêtement selon la revendication 1 ou 2, caractérisé en ce qu'il se présente sous une forme sans solvant.

**4.** Produit de revêtement selon la revendication 1 ou 2, caractérisé en ce qu'il se présente sous une forme contenant un solvant.

**5.** Produit de revêtement selon la revendication 1 ou 2, caractérisé en ce qu'il se présente sous la forme d'une solution aqueuse.

**6.** Produit de revêtement selon l'une ou plusieurs des revendications 1 à 5, caractérisé en ce qu'il contient un ou plusieurs sensibilisateurs.

**7.** Produit de revêtement selon l'une ou plusieurs des revendications 1 à 6, sous forme d'un vernis transparent exempt de pigments, ou d'un vernis de finition contenant des pigments.

**8.** Procédé pour préparer un revêtement, caractérisé en ce qu'on applique sur un subjectile à revêtir un produit de revêtement selon l'une des revendications 1 à 7, on durcit à l'aide d'un rayonnement riche en énergie, en particulier un rayonnement UV, la surface du feuil ainsi obtenue, puis on fait durcir à coeur les couches plus profondes, à la température ambiante ou en les chauffant.

**9.** Utilisation des produits de revêtement selon l'une des revendications 1 à 7 pour réaliser des revêtements présentant une surface durcissant rapidement.

**10.** Utilisation des produits de revêtement selon l'une ou plusieurs des revendications 1 à 7 en tant que vernis transparent, ou vernis de finition ou apprêt garnissant.

**11.** Utilisation de la composition de produits de revêtement selon l'une des revendications 1 à 7 pour fabriquer des couches de vernis transparent ou de vernis de finition dans les laquages multicouches, en particulier lors du laquage de véhicules ou d'éléments de carrosserie automobile.